# EUROPEAN PATENT SPECIFICATION

(11) **EP 2 544 549 B1**
(45) Date of publication and mention of the grant of the patent: **02.09.2015**
(21) Application number: 11709321.1
(22) Date of filing: 14.03.2011
(51) Int. Cl.: A23C 19/082, A23J 3/08, A23J 3/26

(54) **A RETICULATE DAIRY BASED PRODUCT**
Netzartiges Produkt auf Milchbasis
Produit réticulé à base de lait

(30) Priority: 23.11.2010 EP 10192133; 12.03.2010 EP 10156356
(43) Date of publication of application: 16.01.2013
(73) Proprietor: Arla Foods Amba, 8260 Viby J (DK)
(72) Inventor: CARØE, Christina, DK-8382 Hinnerup (DK); KRISTENSEN, Jens Jørgen Søgaard, DK-7400 Herning (DK); KØBKE, Kathrine, DK-8660 Skanderborg (DK); JENSEN, Klaus Juhl, DK-8380 Trige (DK); KNUDSEN, Lisbeth Bjerre, DK-8260 Viby J (DK)
(74) Representative: Plougmann & Vingtoft A/S
(86) International application number: PCT/DK2011/050081
(87) International publication number: WO 2011/110184

(56) References cited:
- EP-A1- 1 576 886
- WO-A1-2006/130025
- GB-A- 2 045 051
- US-A- 4 902 523
- US-A1- 2003 003 194
- US-A1- 2008 187 634
- US-B1- 6 455 092
- DATABASE WPI Week 199120 Thomson Scientific, London, GB; AN 1991-145957 XP002581579, & JP 3 083541 A (SNOW BRAND MILK PROD CO LTD) 9 April 1991 (1991-04-09)

## Description

### Field of the invention

The present invention relates to a method for producing a reticulate dairy-based product as well as a reticulate dairy-based product obtainable by said method. Moreover the present invention relates to a reticulate dairy-based product comprising entangled threads of a dairy-based product such as a cheese product.

### Background of the invention

Natural yellow type cheeses like for example Gouda are traditionally produced on the basis of pasteurized cow milk, introducing a acidifying agent such as a lactic acid-producing bacterial starter culture into cheese milk. Rennet, a casein-precipitating enzyme, may be added to the cheese milk in order to obtain a coagulum; the coagulum is cut, stirred and heated into cheese curd.

The cheese curd is pressed together to form a coherent cheese mass. The coherent cheese mass is cooled in water for a day and afterwards brined for a day. Subsequently the cheese mass is ripened for a specified length of time - the ripening period depends on the cheese type. Once the cheese has developed a desired flavour, texture and appearance the cheese can be sold. In the production of for example Gouda cheese the ripening period vary from 30 days up to more than 15 months.

As the natural yellow type cheese production process is very time consuming, primarily due to the long ripening period, the inventors of the present invention found that by using equipment traditionally used in production of pasta filata, a natural cheese product with a supple, creamy consistency and any desirable taste may be obtained in a very short time as no maturation of this cheese product is necessary. This process is disclosed in PCT application PCT/DK2008/000056.

The natural cheese product (NCP) obtained by the process disclosed in PCT/DK2008/000056 is a "blind" natural cheese product, i.e. a cheese comprising substantially no or a very limited amount of visible and microscopic holes. Traditional natural yellow type cheeses and the blind natural cheese product disclosed above may feel and taste heavy and greasy due to the texture of the cheese. Thus, it is desired to open the body of the cheese in order to provide a light textured natural cheese product.

Traditionally, holes are formed in the structure of natural yellow type cheeses by gas producing citrate-and lactose fermenting bacteria during ripening of the cheese. The holes may vary in number, distribution, size, and shape. Holes are formed when CO₂, produced by the bacteria, are confined in microscopic holes present in the cheese. The microscopic holes grow with increasing amount of CO₂ thus, opening up the body of the cheese. The desired number, size, distribution and the shape of the holes depend solely on the cheese type to be produced, however, abnormal holes with asymmetric shapes and slit defects are never contemplated. The gas-producing bacteria continue to produce CO₂ as long as substrates are present in the cheese.

In a NCP (natural cheese product), such as the one disclosed in PCT/DK2008/000056, it is not possible to use microorganisms for hole formation. Due to the lack of microscopic holes in a blind natural cheese product, the gas produced by added microorganisms cannot be taken up by the cheese thus leading to a very compact structure, less appreciated by consumers.

In respect of pasta filata type cheeses (such as mozzarella) having a rubbery and fibrous texture no need has existed to provide a light textured cheese as these cheeses are meant for melting. In melted cheese the previous structuring has no importance.

Accordingly, there exists a need in the art to provide a dairy-based product which simultaneously accomplishes the needs of both the modern consumer who demands a light textured and low calorie product and the industry who wishes to limit the storage capacity by producing products where the need for a ripening/maturation period is avoided.

### Summary of the invention

It has surprisingly been found that a reticulate dairy-based product can be obtained by subjecting a dairy-based product to the method disclosed in the present invention.

By using the method disclosed in the present invention the appearance and mouth feel of the obtained reticulate dairy-based product is substantially improved when compared to traditional natural yellow type cheese and natural cheese products (NCP), having a heavy and greasy appearance. This confers sensory and marketing advantages to reticulate dairy-based products over traditional natural yellow type cheeses and blind natural cheese products. A light and less compact texture improves both the visual aspects of the reticulate dairy-based product, the taste of the reticulate dairy-based product and simultaneously reduces the fat intake per serving as part of the product is replaced by air.

Moreover, the need for storage capacity can be significantly reduced as no maturation of the reticulate dairy-based product is needed. Accordingly, the reticulate dairy-based product can be produced in a very short time as no maturation of the product is necessary. The product is ready for consumption immediately after production.

Accordingly, a reticulate dairy-based product comprising a light texture can be obtained by the method of the present invention.

Thus, one aspect of the invention relates to a method for producing a reticulate dairy-based product, said method comprising the steps of:
(a) subjecting a dairy-based product to an extrusion process to obtain multiple individual threads of the dairy-based product,
(b) structuring said multiple individual threads of the dairy-based product to obtain a reticulate dairy-based product comprising a coherent network of multiple entangled individual threads of the dairy-based product, wherein the multiple individual threads of the dairy-based product have a diameter below 4 mm and wherein the reticulate dairy-based product has a density below 1.0 g/cm³.

Another aspect of the present invention relates to a reticulate dairy-based product obtainable by this method.

Yet another aspect of the present invention relates to the provision of a reticulate dairy-based product comprising a coherent network of multiple entangled individual threads of a dairy-based product, wherein the individual threads have a diameter below 4mm.

### Brief description of the figures

Figure 1 shows a flow diagram of the method for producing a reticulate-based dairy product.
Figure 2 shows the microstructural difference between the non-oriented micro structure of a NPC-based reticulate product, and the fibrous structure of a mozzarella-type product.
Figure 3 shows a stereomicroscopy picture of a single thread from a natural cheese product.
Figure 4 shows an illustration of the method for measuring density of a reticulate dairy-based product.
Figure 5 shows an example of a network structure.
Figure 6 shows differences in thread structure depending on pH (Example 2).
Figure 7 shows an example of a reticulate dairy-based product seen as a single layer sheet.

The present invention will now be described in more detail in the following.

### Detailed description of the invention

### Definitions

In the present context the term "reticulate dairy-based product" relates to a coherent network of multiple entangled individual threads of a dairy-based product. The term "reticulate dairy-based product" is to be understood at a macro level - i.e. as a dairy-based product visually having the form of a coherent network of a dairy-based product. Thus, a "reticulate dairy-based product" according to the present invention comprises multiple entangled individual threads of a dairy-based product, wherein said treads have a diameter below 4 mm.

In the present invention, the term "sheet-formed" is to be understood as a substantially flat and/or thinly expanded coherent network of multiple entangled individual threads of a dairy-based product.

"Multiple entangled threads" is to be understood as two or more individual threads of a dairy-based product.

In the present context, the term "coherent network of a dairy-based product" is to be understood as a network of multiple entangled individual threads of a dairy-based product wherein substantially all threads in the network are in contact with other threads in the network. Said contact may be the crossing point of two threads.

In the present context, the term "dairy-based product" is to be understood as a product comprising ingredients which are fully or partly of dairy origin. The ingredients may be combined into a viscous mass, suitable for extrusion. Alternatively the ingredients may be combined into a viscous base that can be heated and extruded.

In the present context, the term "structuring" is to be understood at a macro level - i.e. as a step where the structuring of the multiple individual threads of the dairy-based product can be seen visually. Thus, according to the present invention "structuring" relates to the entanglement of multiple individual threads of the dairy-based product, following extrusion, into a network - i.e. the "reticulate dairy-based product".

In the present context, the term "mozzarella type cheese product" is to be understood as a dairy-based product consisting essentially of long stranded parallel-oriented fibrous protein structures. A "mozzarella type cheese product" is normally produced by a method where a dairy-based product is subjected to (i) a heating step (with e.g. hot water or steam) followed by a (ii) stretching step. The parallel-oriented fibrous protein structures in a "mozzarella type cheese product" is the result of the stress (heat followed by stretching) put on the proteins.

In the present context, the term "non-mozzarella type cheese product" is to be understood as a dairy-based product not characterized as a "mozzarella type cheese product".

In the present context the term "threads" is to be understood as thin strings, threads, strands or lines of a dairy-based product.

In the present context the term "natural cheese product" (NCP) is to be understood as a cheese product produced without using emulsifying salts. The term "emulsifying salts" means salts added to cheese in order to dissolve protein for integration of fat, protein and water into a uniform smooth mass. Two major categories of emulsifying salts are citrates and phosphates, e.g. sodium citrate, orthophosphate and polyphosphates. Other types of salts have also been used as emulsifying salts, e.g. sodium lactate and sodium tartate, but they are less attractive than the citrates and phosphates.

In the present context, the term "recombined cheese product" is to be understood as milk products resulting from the combination of milk-fat and milk-solids-nonfat, with or without water. It is preferred that this combination is made so as to reestablish the products specified fat-to-solid ratio and solids-to-water ratio.

In the present context, the term "processed cheese product" is to be understood as cheese with melting salts added in order to dissolve protein for integration of fat, protein and water into a uniform smooth mass. Processed cheese is also sometimes known as cheese food, prepared cheese or cheese slice in the United Kingdom. In the United States, it most commonly goes by the name American cheese.

Two major categories of emulsifying salts are citrates and phosphates, e.g. sodium citrate, orthophosphate and polyphosphates. Other types of salts may also be used as emulsifying salts, e.g. sodium lactate and sodium tartate. Processed cheese may contain other ingredients than melting salts, in order to control the consistency of the product, e.g. hydrocolloids.

In the present context, the term "fresh cheese product" is to be understood as a dairy-based renneted concentrate, such as ultrafiltrated concentrates, or non-matured cheese or cheese coagulum.

In the present context, the term "mature cheese product" is to be understood as cheese which has developed flavour by maturation as described by Kosikowski and Mistry (1997).

In the present context, the term "analogue cheese product" is to be understood as a recombined cheese product where some of the milkfat is replaced with vegetable oil, or some of the milk-solids-non fat is replaced by non-milk ingredients.

In the present context the term "density" is to be understood as a measure of the void spaces in material (such as a reticulate dairy-based product), and is a fraction of the volume of voids over the total volume.

In an embodiment according to the present invention, the void spaces present in the reticulate dairy-based product may be substantially homogenously distributed.

### Method for producing a reticulate dairy-based product

In one aspect the present invention pertains to a method for producing a reticulate-based dairy product,
said method comprising the steps of:
(a) subjecting a dairy-based product to an extrusion process to obtain multiple individual threads of the dairy-based product,
(b) structuring said multiple individual threads to obtain a reticulate dairy-based product comprising a coherent network of multiple entangled individual threads of the dairy-based product, wherein the multiple individual threads of the dairy-based product have a diameter below 4 mm and wherein the reticulate dairy-based product has a density below 1.0 g/cm³.

In another embodiment the present invention pertains to a method for producing a reticulate dairy-based product, said method comprising the steps of:
(a) subjecting a dairy-based product to an extrusion process to obtain multiple individual threads of the dairy-based product,
(b) structuring said multiple individual threads of the dairy-based product to obtain a reticulate dairy-based product comprising a sheet-formed coherent network of multiple entangled individual threads of the dairy-based product, wherein the multiple individual threads of the dairy-based product have a diameter below 4 mm and wherein the reticulate dairy-based product has a density below 1.0 g/cm³.

In an embodiment, the reticulate dairy-based product is a coherent network of multiple entangled individual threads of a dairy-based product. Preferably, a sheet-formed coherent network of multiple entangled individual threads of a dairy-based product.

In order to overcome the problems of the prior art - i.e. to avoid the rubbery and fibrous texture of the pasta filata type cheeses, it is preferred that the dairy-based product is a non-mozzarella type cheese product. By using a non-mozzarella type cheese product the mouthfeel of the reticulate dairy product is significantly improved due to the non-oriented microstructure of the dairy-based product.

In the method for producing a reticulate dairy-based product the starting material may be various types of dairy-based products produced by conventional methods known in the art. Thus, depending on the reticulate dairy-based product to be obtained the dairy-based product (i.e. starting material) may vary.

In one embodiment the starting material- i.e. the dairy-based product is selected from the group consisting of an NCP (a natural cheese product), a recombined cheese, a processed cheese, a mix of fresh and matured cheese products, an analogue cheese product and combination/mixes hereof. Moreover un-ripened cheese curd which has been frozen or cold-stored may be used.

It is to be understood that one or more dairy-based product(s), such as two or more, e.g. 3 or more, such as 4 or more, e.g. 5 or more may be subjected to extrusion, in order to provide a mixed reticulate dairy-based product. The combination of more than one dairy-based product may be used to adjust the taste, texture and/or fat intake per serving of the resulting reticulate dairy-based product.

In a preferred embodiment the one, two or more, e.g. 3 or more, such as 4 or more, e.g. 5 or more dairy-based products are different. The extrusion of the one or more dairy-based product(s), such as two or more, e.g. 3 or more, such as 4 or more, e.g. 5 may be performed at the same time using different extruders and extruder heads.

In order to create varieties of the reticulate dairy-based product it may be preferred to combine the dairy-based product or the reticulate dairy-based product with spices, meat, pesto, salt, nuts, herbs, fruits, or extracts hereof, flavours, carbohydrates/protein and combinations hereof.

In one embodiment, the flavour may be an ingredient added to the dairy-based product before extrusion in order to develop further flavour, such as a matured cheese product flavour or spices. Examples of such flavours are matured cheese, enzyme modified cheese, cheese powder, other milk-based taste ingredients and mixtures thereof. The term mature cheese is to be understood as a cheese, which is ripened, cured or matured as described by Kosikowski and Mistry (1997). Mature cheese powder is powder produced on the basis of a mature cheese that has undergone a spray drying process or a drum drying process.

The flavour may comprise spices like chilli, pepper, paprika etc., or finely crushed herbs like oregano, basil, thyme or extracts, such as e.g. rosemary oil.

The flavour may be mature cheese in an amount of up to 100% of the dairy-based product, such as up to 90% of the dairy-based product, e.g. up to 80% of the dairy-based product, such as up to 70% of the dairy-based product, e.g. up to 60% of the dairy-based product, such as up to 50% of the dairy-based product, e.g. up to 40% of the dairy-based product, such as up to 30% of the dairy-based product, e.g. up to 20% of the dairy-based product, such as up to 10% of the dairy-based product, e.g. in the range from 100-0% of the dairy-based product, such as in the range from 90-10% of the dairy-based product, e.g. in the range from 80-20% of the dairy-based product, such as in the range from 70-30% of the dairy-based product, e.g. in the range from 60-40% of the dairy-based product, such as in the range from 50-40% of the dairy-based product.

In an embodiment, the dairy-based product comprises in the range from 20-40% mature cheese.

In a preferred embodiment, the dairy-based product comprises 30% mature cheese.

In order to simultaneously (i) reduce the calorie intake per serving of the resulting reticulate dairy-based product, (ii) provide a less greasy appearance of the resulting reticulate dairy-based product and (iii) provide elastic threads of the dairy-based product it may be preferred that the dairy-based product has a fat content below 29% fat, such as below 28%, e.g. below 27%, such as below 26%, such as below 25%, e.g. below 24%, such as below 23%, e.g. below 22%, such as below 21%, e.g. below 20%, such as below 19%, e.g. below 18%, such as below 17%, e.g. below 16%, such as below 15%, e.g. below 14%, such as below 13%, e.g. below 12%, such as below 11%, e.g. below 10%, such as below 9%, e.g. below 8%, such as below 7%, e.g. below 6%, such as below 5%, e.g. below 4%, such as below 3%, e.g. below 2%, such as below 1%, e.g. in the range from 0.01% - 29%, such as in the range from 1% - 28%, e.g. in the range from 2% - 27%, such as in the range from 3% - 26% e.g. in the range from 4% - 25%, such as in the range from 5% - 24% e.g. in the range from 6% - 23%, such as in the range from 7% - 22% e.g. in the range from 8% - 21%, such as in the range from 9% - 20% e.g. in the range from 10% - 19%, such as in the range from 11% - 18% e.g. in the range from 12% - 17%, such as in the range from 13% - 16%, e.g. in the range from 14% - 15%, such as in the range from 6% - 10%.

In a preferred embodiment the dairy-based product has a fat content in the range from 6%-10%. As can be seen in Example 4, this particular range provided threads, which retained its round shape following extrusion.

In order to provide a sufficient fusion in the crossing points of the threads to obtain a coherent reticulate dairy-based product it may be preferred that the temperature of the dairy-based product before extrusion is above 45°C, such as above 46°C, e.g. above 47°C, such as above 48°C, e.g. above 49°C, such as above 50°C, e.g. above 51°C, such as above 52°C, e.g. above 53°C, such as above 54°C, e.g. above 55°C, such as above 56°C, e.g. above 57°C, such as above 58°C, e.g. above 59°C, such as above 60°C, e.g. above 61°C, such as above 62°C, e.g. above 63°C, such as above 64°C, e.g. above 65°C, such as above 76°C, e.g. above 67°C, such as above 68°C, e.g. above 69°C, such as above 70°C, e.g. above 71°C, such as above 72°C, e.g. above 73°C, such as above 74°C, e.g. above 75°C, such as above 76°C, e.g. above 77°C, such as above 78°C, e.g. above 79°C, such as above 80°C, e.g. above 81°C, such as above 82°C, e.g. above 83°C, such as above 84°C, e.g. above 85°C, such as above 86°C, e.g. above 87°C, such as above 88°C, e.g. above 89°C, such as above 90°C, e.g. above 91°C, such as above 92°C, e.g. above 93°C, such as above 94°C, e.g. above 95°C, e.g. in the range from 40 - 95°C, such as in the range from 45 - 90°C, e.g. in the range from 50 - 85°C, such as in the range from 55 - 80°C, e.g. in the range from 60 - 75°C, such as in the range from 65 - 70°C.

In another preferred embodiment, the temperature of the dairy-based product before extrusion is above 60°C, such as in the range from 60-95°C.

In a preferred embodiment, the temperature of the natural cheese product before extrusion is above 45°C, such as in the range from 55-60°C.

In order to provide fine threads the extrusion is performed using at least one extruder pressurising the dairy-based product. The extruder may be a Handtmann extruder or any extruder.

Accordingly, an extruder or a pumping device may deliver the dairy-based product to an extrusion head with one or more fine channels in order to obtain threads of the dairy-based product.

In one embodiment, the extruder head is movable.

It has surprisingly been found that it is possible to obtain a reticulate dairy-based product having an improved mouth feel and a light and less compact structure. To obtain such reticulate dairy-based product it may be preferred that the threads have a diameter below 4 mm, such as below 3.5 mm, e.g. below 3 mm, such as below 2.5 mm, e.g. below 2 mm, such as below 1.5 mm, e.g. below 1 mm, such as below 0.5 mm, e.g. in the range from 0.1 - 4 mm, such as in the range from 0.2 - 3.5 mm, e.g. in the range from 0.3 - 3 mm, such as in the range from 0.4 - 2.5 mm, e.g. in the range from 0.5 - 2 mm, such as in the range from 0.6 - 1.9 mm, e.g. in the range from 0.7 - 1.8 mm, such as in the range from 0.8 - 1.7 mm, e.g. in the range from 0.9 - 1.6 mm, such as in the range from 1 - 1.5 mm, e.g. in the range from 1.1 - 1.4 mm, such as in the range from 1.2 - 1.3 mm, preferably in the range from 0.5-2 mm.

In a preferred embodiment, the structuring in step (b) of the method described above is performed by letting the threads of the dairy-based product obtained in step (a) fall onto a surface.

The surface may be a table and preferably an airflow table.

In an embodiment, the surface is movable. Thus, the surface may a conveyer belt, a shaking table or other movable surfaces.

The threads may be collected on the surface where they can form a reticulate, network or grid structure - i.e. a reticulate dairy-based product. The reticulate dairy-based product may be formed of threads, which are more or less melted/fused together. If the dairy-based product is too hot upon extrusion the threads are likely to fuse to a too high degree. Thus, it is contemplated that the elasticity and round shape of the threads are maintained following extrusion while providing a sufficient melting and cooling/drying of the threads once they have fallen onto the surface.

The pattern of the obtained reticulate dairy-based product can be adjusted by adjusting the recipe of the dairy-based product, temperature profile during forming and cooling of the dairy-based product and/or the design of the extruder head and flow speed.

By combining more layers of the reticulate dairy-based product different patterns and shapes may be obtained.

The pattern of the reticulate dairy-based product can also be modified by use of vibrating or movement of the extruder or on the conveyer belt. Following extrusion, the threads may also be collected as a loose bundle of threads or a bundle of reticulated treads. The use of an airflow table instead of conveyer belt is preferred when the threads are intended to be separated.

The threads may also be structured by use of molds or other shaping tools. The threads may also be structured into a layer of sheets, which may be cut into pieces. Thus, in another embodiment the reticulate dairy-based product has a thickness, when in sheet-form, at or below 35 mm, such as in the range from 0.1 mm - 35 mm, e.g. in the range from 1 mm - 34 mm, such as in the range from 2 mm - 33 mm, e.g. in the range from 3 mm - 32 mm, such as in the range from 4 mm - 31 mm, e.g. in the range from 5 mm - 30 mm, such as in the range from 6 mm - 29 mm, e.g. in the range from 7 mm - 28 mm, such as in the range from 8 mm - 27 mm, e.g. in the range from 9 mm - 26 mm, such as in the range from 10 mm - 25 mm, e.g. in the range from 11 mm - 24 mm, such as in the range from 12mm - 23 mm, e.g. in the range from 13 mm - 22 mm, such as in the range from 14mm - 21 mm, e.g. in the range from 15 mm - 20 mm, such as in the range from 16mm - 19 mm, e.g. in the range from 17 mm - 18 mm.

In a preferred embodiment the sheet-formed coherent network of multiple entangled threads of a dairy-based product has a thickness below 35 mm, such as in the range from 0.1 mm - 35 mm, e.g. in the range from 1 mm - 34 mm, such as in the range from 2 mm - 33 mm, e.g. in the range from 3 mm - 32 mm, such as in the range from 4 mm - 31 mm, e.g. in the range from 5 mm - 30 mm, such as in the range from 6 mm - 29 mm, e.g. in the range from 7 mm - 28 mm, such as in the range from 8 mm - 27 mm, e.g. in the range from 9 mm - 26 mm, such as in the range from 10 mm - 25 mm, e.g. in the range from 11 mm - 24 mm, such as in the range from 12mm - 23 mm, e.g. in the range from 13 mm - 22 mm, such as in the range from 14mm - 21 mm, e.g. in the range from 15 mm - 20 mm, such as in the range from 16mm - 19 mm, e.g. in the range from 17 mm - 18 mm.

A cutting device can adjust the size and shape of the reticulate dairy-based product. A cutting device can adjust the length of the threads. The height of the reticulate dairy-based product can be adjusted mechanically this could be done by the use of a roller.

The reticulate dairy-based product may preferably be a sheet-formed coherent network of multiple entangled individual threads of a diary-based product.

The reticulate dairy-based product may also be formed into cubes, balls or cylinders. Such cubes, balls or cylinders may be formed directly once the threads leave the extruder head.

The threads can be used to form a reticulated ball in the dimension 10 mm - 100 mm.

Besides being reduced in calorie intake per serving cubes, balls or cylinders are very decorative and their light texture fits perfectly to crispy foods such as salad.

In order to provide a sufficient amount of melting of the threads during forming the threads of the dairy-based product obtained in step (a) are subjected to a cooling, heating, coating, decorating and/or a drying step before the structuring in step (b).

In a preferred embodiment, the cooling, heating, coating and/or drying step comprises applying a gas stream or radiant heating of the threads of the dairy-based product. The gas may be air.

The extrusion step (a) and the cooling and/or drying step described above may be combined with a decorating step. Decoration could be with ingredients such as nuts, spices, fat, sugar, starch etc.

The extrusion step (a) and the cooling and/or drying step described above may be combined into one step.

The extrusion step (a) heating and/or drying step described above may be combined into one step.

The cooling, heating and/or drying step may be performed using an airflow table or a heating/cooling plate.

By using a cooling, heating or drying step (single or combined) the properties of the threads can be modified. These steps alone or in combination may also be used to adjust the melting of the threads.

In an embodiment of the present invention the extrusion step (a) involves a first pH adjustment of the dairy-based product prior to extrusion, preferably the first pH adjustment is an acidic treatment, a second pH adjustment of the dairy-based product prior to extrusion, preferably the second pH adjustment is an alkaline treatment or a first pH adjustment and a second pH adjustment of the dairy-based product prior to extrusion. Preferably, the diary-based product is subjected to an acidic treatment of the diary-based product followed by an alkaline treatment of the diary product prior to extrusion.

In an embodiment of the present invention the acidic treatment involves adjusting the pH to a value in the range of pH 4.0-5.0, such as in the range between 4.3-4.7, e.g. about pH 4.5.

In another embodiment of the present invention, the acidic treatment is performed by addition of an acidic compound or an acidic concentrate. The acidic compound may be any food grade acids, preferably citric acid. The acidic concentrate may be a natural concentrate obtained from fruits or vegetables. Preferably, the acidic concentrate may be a natural concentrate obtained from citrus fruits, such as lime, orange, lemon and grapefruit.

In yet an embodiment of the present invention the alkaline treatment involves adjusting the pH to a value in the range of pH 5.0-6.0, such as in the range between 5.3-5.7, e.g. about pH 4.5.

In yet another embodiment of the present invention the alkaline treatment is performed by addition of a base. The base may be any food grade bases, such as sodium hydroxide or potassium hydroxide, preferably sodium hydroxide.

The reticulate dairy-based product may be packed and subsequently stored under refrigeration. Cool storage is preferred for increasing the shelf life of the product.

### A reticulate dairy-based product obtainable by the method disclosed above

In another aspect, the present invention pertains to a reticulate dairy-based product obtainable by the method disclosed above.

### A reticulate dairy-based product

In a further aspect the present invention pertains to a reticulate dairy-based product comprising a coherent network multiple entangled individual threads of a dairy-based product, wherein the individual threads have a diameter below 4 mm, such as below 3.5 mm, e.g. below 3 mm, such as below 2.5 mm, e.g. below 2 mm, such as below 1.5 mm, e.g. below 1 mm, such as below 0.5 mm, e.g. in the range from 0.1 - 4 mm, such as in the range from 0.2 - 3.5 mm, e.g. in the range from 0.3 - 3 mm, such as in the range from 0.4 - 2.5 mm, e.g. in the range from 0.5 - 2 mm, such as in the range from 0.6 - 1.9 mm, e.g. in the range from 0.7 - 1.8 mm, such as in the range from 0.8 - 1.7 mm, e.g. in the range from 0.9 - 1.6 mm, such as in the range from 1 - 1.5 mm, e.g. in the range from 1.1 - 1.4 mm, such as in the range from 1.2 - 1.3 mm, preferably in the range from 0.5-1.5 mm.

The appearance and mouth feel of such a reticulate dairy-based product are substantially improved when compared to traditional cheese products such as natural yellow type cheese and natural cheese products (NCPs). Thus, the reticulate dairy-based product of the present invention has a light and less compact texture which improves both the visual aspects and the taste of the reticulate dairy-based product and simultaneously reduces the calorie intake per serving.

Thus, it may be preferred that the dairy-based product is a non-mozzarella type cheese product.

In one embodiment the dairy-based product is selected from the group consisting of an NCP (a natural cheese product), a recombined cheese, a process cheese, a mix of fresh and matured cheese products, an analogue cheese product and combination/mixes hereof. Moreover un-ripened cheese curd which has been frozen or cold-stored may be used.

In an embodiment, the multiple entangled threads are two or more individual threads.

An advantage of an reticulate dairy-based product comprising entangled threads of a dairy-based product, is that jam, honey etc. which traditionally are applied to the slices of cheese prior to consumption, will be contained between the entangled threads and will not "run off" like it does when applied to traditional products like sliced natural yellow type cheeses

The order to create varieties of the reticulate dairy-based product it may be preferred to combine or coat the reticulate dairy-based product with spices, herbs, fruits, or extracts hereof, flavours, carbohydrates/protein and combinations hereof. The reticulate dairy-based product may further be combined with ingredients like finely ground nuts, seeds, herbs and fruits.

Due to the unique structure of the reticulate dairy-based product the calorie intake per cm³ of the reticulate dairy-based product may be less than 3.3 kcal per cm³, such as less than 3 kcal, e.g. less than 2.5, such as less than 2, e.g. less than 1.9, such as less than 1.7, e.g. less than 1.5, such as less than 1.3 kcal, e.g. less than 1.2, such as less than 1.1 kcal, e.g. less than 1, such as less than 0.9, e.g. less than 0.8, such as less than 0.7 kcal, e.g. less than 0.6, such as less than 0.5 kcal, e.g. less than 0.4, such as less than 0.3 kcal, e.g. less than 0.2 kcal.

In a preferred embodiment the calorie intake per cm³ of the reticulate dairy-based product is less than 1.1 kcal.

In an embodiment product the calorie intake per cm³ of the reticulate dairy-based product may be in the range from 0.2 - 3.2 kcal, e.g. in the range from 0.3 - 3 kcal, such as in the range from 0.4 - 2.5 kcal, e.g. in the range from 0.5 - 2 kcal, such as in the range from 0.6 - 1.9 kcal, e.g. in the range from 0.7 - 1.7 kcal, such as in the range from 0.8 - 1.5 kcal, e.g. in the range from 0.9 - 1.3 kcal, such as in the range from 1 - 1.2 kcal, e.g. in the range from 1 - 1.1 kcal, such as in the range from 0.8 - 1.2 kcal.

The calorie intake depends on the fat content and the density of the reticulate dairy-based product.

Compared to conventional cheese products the present invention makes it possible to obtain a reticulate dairy-based product having a low calorie intake per serving (cm³).

In a further embodiment the reticulate dairy-based product has a density below 1 g/cm³, such as below 0.9 g/cm³, e.g. below 0.8 g/ cm³, such as below 0.7 g/ cm³, e.g. below 0.6 g/ cm³, such as below 0.5 g/ cm³, e.g. below 0.4 g/cm³, such as below 0.3 g/cm³, e.g. below 0.2 g/cm³, such as below 0.1 g/cm³, e.g. in the range from 0.1 - 1 g/cm³, such as in the range from 0.2 - 0.8 g/cm³, e.g. in the range from 0.3 - 0.7 g/cm³, such as in the range from 0.4 - 0.6 g/cm³, e.g. preferably in the range from 0.3 - 0.6 g/cm³.

Thus, based on the above it is possible to provide a reticulate dairy-based product having a great taste and low calorie intake per serving (depending on the starting material) due to the low density of the product.

A high dry matter content provides a product with a more firm texture, thus it may be preferred that the reticulate dairy-based product has a dry matter content of at least 30 %, such as at least 40%, e.g. at least 55%, such as in the range from 30 - 55%, e.g. in the range from 35 - 50%, such as in the range from 40-45%, preferably in the range from 40-50%. By using e.g. hydrocolloids to bind water, the dry matter content can be lowered, but a certain viscosity is needed for the shaping and forming of the reticulate.

In order to fit into the needs of the consumer the thickness of the reticulate dairy product may vary in thickness depending on whether the product is to be used on bread or whether the product is to be cut into small cubes for e.g. salad applications.

Thus, in another embodiment the reticulate dairy-based product has a thickness, when in sheet-form, at or below 35 mm, such as in the range from 0.1 mm - 35 mm, e.g. in the range from 1 mm - 34 mm, such as in the range from 2 mm - 33 mm, e.g. in the range from 3 mm - 32 mm, such as in the range from 4 mm - 31 mm, e.g. in the range from 5 mm - 30 mm, such as in the range from 6 mm - 29 mm, e.g. in the range from 7 mm - 28 mm, such as in the range from 8 mm - 27 mm, e.g. in the range from 9 mm - 26 mm, such as in the range from 10 mm - 25 mm, e.g. in the range from 11 mm - 24 mm, such as in the range from 12mm - 23 mm, e.g. in the range from 13 mm - 22 mm, such as in the range from 14mm - 21 mm, e.g. in the range from 15 mm - 20 mm, such as in the range from 16mm - 19 mm, e.g. in the range from 17 mm - 18 mm.

In a preferred embodiment the sheet-formed coherent network of multiple entangled threads of a dairy-based product has a thickness below 35 mm, such as in the range from 0.1 mm - 35 mm, e.g. in the range from 1 mm - 34 mm, such as in the range from 2 mm - 33 mm, e.g. in the range from 3 mm - 32 mm, such as in the range from 4 mm - 31 mm, e.g. in the range from 5 mm - 30 mm, such as in the range from 6 mm - 29 mm, e.g. in the range from 7 mm - 28 mm, such as in the range from 8 mm - 27 mm, e.g. in the range from 9 mm - 26 mm, such as in the range from 10 mm - 25 mm, e.g. in the range from 11 mm - 24 mm, such as in the range from 12mm - 23 mm, e.g. in the range from 13 mm - 22 mm, such as in the range from 14mm - 21 mm, e.g. in the range from 15 mm - 20 mm, such as in the range from 16mm - 19 mm, e.g. in the range from 17 mm - 18 mm.

It may be preferred that the reticulate dairy-based product is cut into pieces.

It should be noted that embodiments and features described in the context of one of the aspects of the present invention also apply to the other aspects of the invention.

The invention will now be described in further details in the following non-limiting examples and figures, wherein

### Figures

### Figure 1

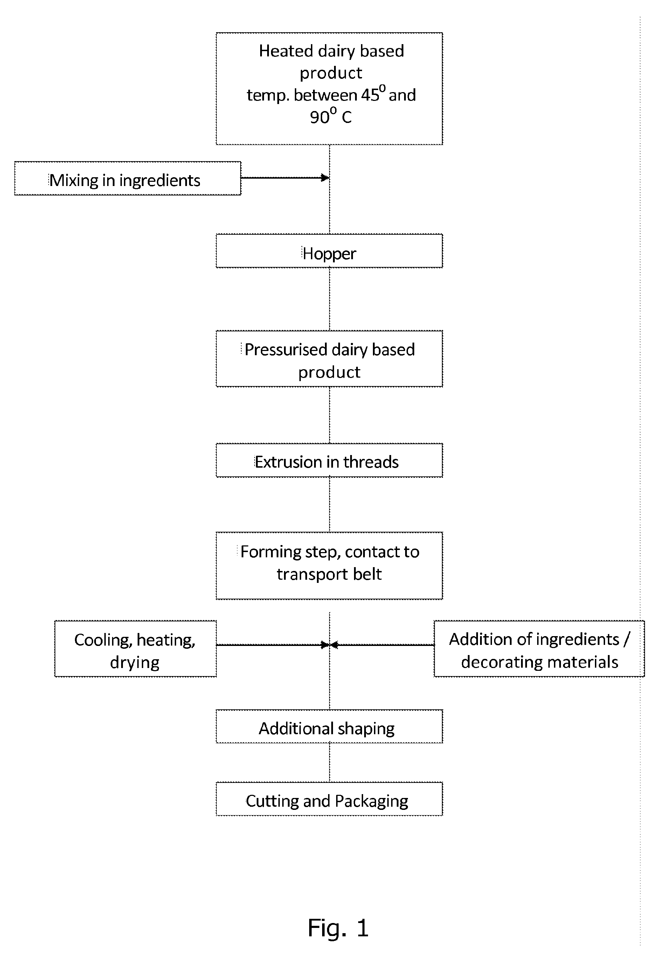

Figure 1 shows a flow chart showing the method for producing a reticulate dairy-based product obtained by the present invention.

The dairy-based product is introduced into the cooker and mixed while heating in the steam-jacketed cooker and by direct steam injection. The preferred pH for the product is adjusted and optional ingredients added. After the product has reached the desired temperature, the dairy-based product is ready for the shaping and cooling process.

The dairy-based product is loaded into an extruder where the dairy-based product is lead through an extrusion head to create a continuous line of threads. The 3-D structure of the reticulate dairy-based product is formed, decorated and cooled. The reticulate dairy product is subsequently packed and stored under refrigeration.

### Figure 2

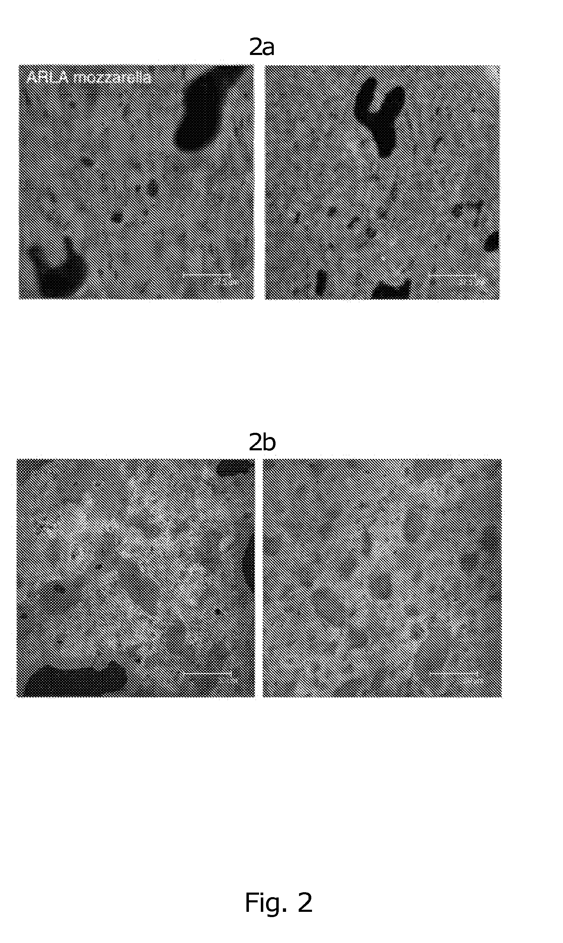

Figure 2 shows Confocal Laser Scanning Microscopy (CLSM) photos of a mozzarella structure (Figure 2a) and a non-mozzarella structure (Figure 2b). Figure 2a shows that mozzarella cheese exhibits a structure which is oriented in long pools of fat/water (black), whereas the stringy nature of the proteins can be seen in the remaining part of the picture (oriented protein fibers). Figure 2b shows that the reticulate dairy-based product made from a natural cheese product exhibits no orientation of the micro-structure. Fat is seen in round pools and protein is randomly distributed around the fat. There is no longitudinal orientation as seen from figure 2a.

### Figure 3

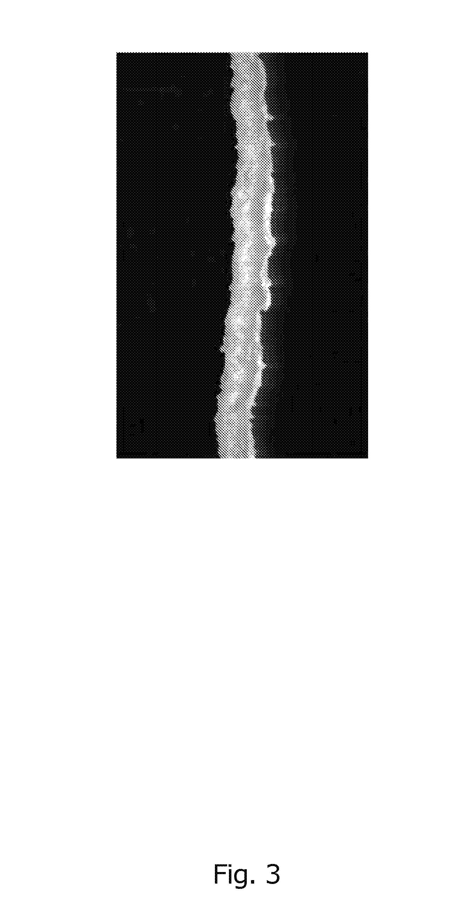

Figure 3 shows a picture of single thread example

### Figure 4

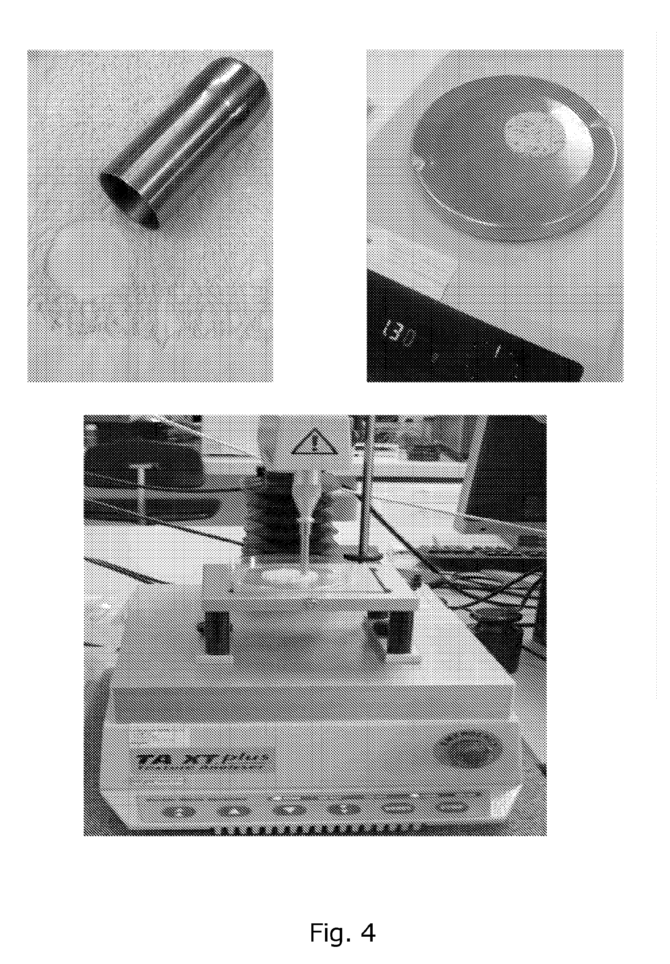

Figure 4 shows an illustration of the method for measuring density of a reticulate dairy-based product (see also the part pertaining to Methods of measuring below).

### Figure 5

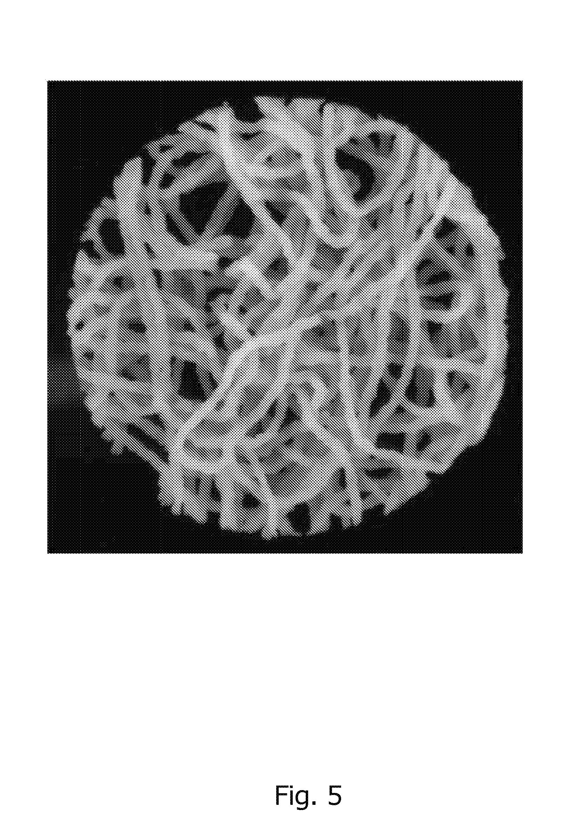

Figure 5 is an example of the network formed in Example 1.

### Figure 6

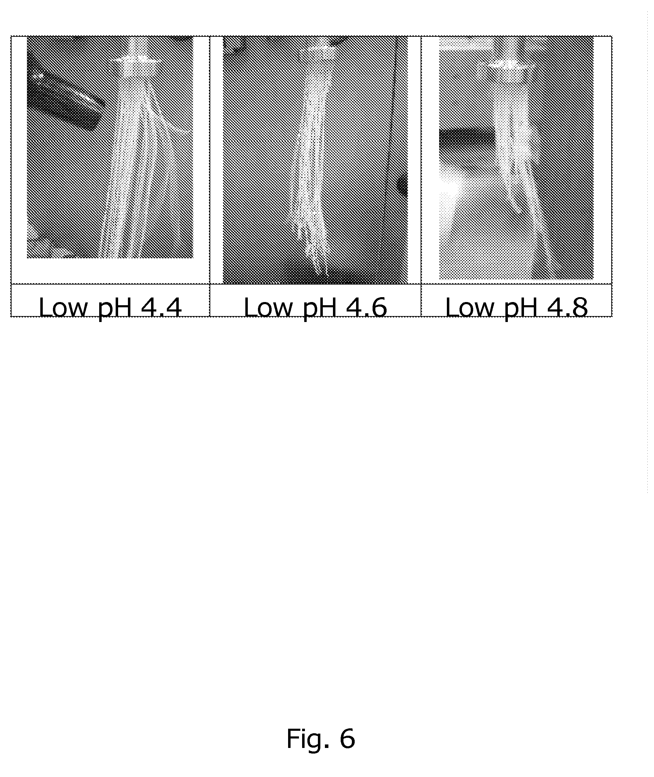

Figure 6 shows the difference in thread elasticity depending on pH, see also Example 2. Batch 1, pH 4.6 shows medium elastic threads. Batch 2, pH 4.8 shows fragile structure threads. Batch 3, pH 4.4 shows sufficient coherent threads.

### Figure 7

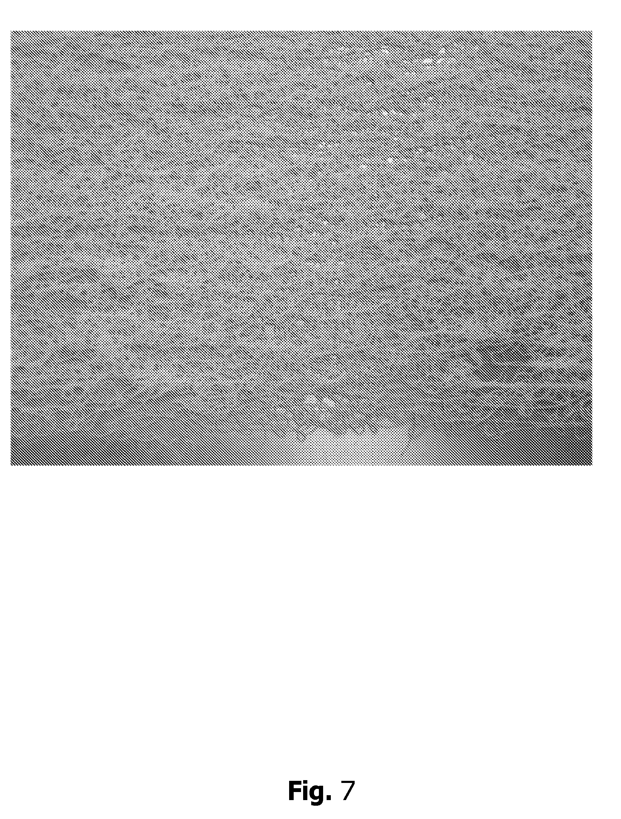

Figure 7 shows an Example of a reticulate dairy-based product seen as a single layer sheet.

### Examples

### Methods of measuring

### Method 1. Measurement of Thickness of threads by image-analysis

Single threads are situated under a stereomicroscope in vertical position on a black surface. No magnification used. Se illustration in Figure 3.
At least six samples of threads are photographed and the pictures analysed with the help of software "Leica IM1000". Each thread is measured 3 times in each picture.

The thickness of the threads is measured in mm as a mean value of the 18 measurements, with standard deviation.

### Method 2. Density by weighing and measuring height of defined area

Three samples from a network are used for cutting out a coin-shape with diameter 3.9 cm, and an area of 11.94 cm². Figure 4 illustrates the method. The coin weights are noted. The height of the coins are measured by use of a texture analyser, SMS, in the following way: the probe height is calibrated on a petri dish, having the petri dish as zero-point. The coin sample is placed on the petri dish. The probe is forced downwards by a constant speed of 10 mm/sec. When the probe measures a resistance of 2 g, the probe is automatically stopped and the distance to zero is measured as the height of the sample. Each coin is measured at three different positions of the probe on the surface.

Density can be calculated as g/cm3. Density is reported as the mean value of the 9 measurements.

### Method 3. Microstructure of the threads, which the network is built of, visualised by Confocal Laser Scanning Microscopy.

By use of Confocal Laser Scanning Microscopy (CLSM), it is possible to visualise the fat and protein distribution in the threads. The fat is coloured with Nile Red, the protein with FITC. By this method the orientation or non-orientation of the protein structure can be detected.

### Example 1

For these experiments cheese e.g. 50 kg low fat cheese (unmatured) and 8 kg of matured cheese was loaded into a double screw direct steam injection cooker. Salt (0.5 %) was introduced into the cooker and dry mixed for 30 seconds at 30 rpm. Immediately after mixing, steam was directly applied to the mass by means of 2 injectors, which were positioned at both sides of the cooker. The steam, together with the mechanical effect (80 rpm) of the screws separated the cheese mass. Heating and mixing was continued until the cheese mass had a temperature of 55 °C. When the cheese mass reached the temperature of 55 °C citric acid (1,042 kg 93 % ww) was introduced into the cooker and the pH of the cheese mass was adjusted to pH 4.40 and mixed with the hot cheese for 3 minutes and 30 seconds (80 rpm). After mixing the citric acid into the cheese mass, NaOH was added into the cooker adjusting the pH of the mass to pH 5.50, and mixed for 10 minutes at 80 rpm to form a homogeneous cheese mass. At this point, the cheese mix was ready for the shaping and cooling process.

The cheese mass was loaded into a single jacket extruder (Handtmann) which lead the cheese through a nozzle head with 0.5 mm diameter holes (displaced from each other) to create a continuous line of threads. An air stream was applied around the threads to cool them down so they would keep their 3-D form when falling on to a moving table that was located beneath the single jacket extruder. The cheese was subsequently packed and stored under refrigeration.

### Example 2

The cheese mass was prepared as described in Example 1

For this experiment the low pH was adjusted to find the best consistency of the threads.

| Batch 1 | Batch 2 | Batch 3 |
|---|---|---|
| pH 4.40 | pH 4.60 | 4.80 |

The best results were obtained with batch 1 when adjusting the pH by citric acid to pH 4.40, as the resulting threads were sufficiently coherent. (Figure 6). Batch 2 and 3 adjusted to pH 4.60 and 4.80, respectively, resulted in threads having an elasticity between medium elasticity and fragile.

### Example 3

The cheese mass was prepared as described in Example 1.

For this experiment different heating temperatures were applied the cheese.

| Batch 1 | Batch 2 | Batch 3 |
|---|---|---|
| 50 °C | 55 °C | 60 °C |

It was found that the temperature in the natural cheese product base should preferably be between 55°C and 60°C to provide the best threads. A temperature of 50°C resulted in fragile structured threads.

### Example 4

The cheese mass was prepared as described in Example 1

For these experiments full fat cheese (fat content from 25 % to 30 %) was used, and a combination of 14 % full fat cheese (fat content from 25 % to 30 %) and 87 % low fat cheeses (fat content from 6 % to 10 %). It was found that full fat cheeses were too greasy and it was difficult to separate the threads after extrusion from the nozzle. Furthermore, the mechanical treatment from the extruding process squeezed out fat from the cheese mass. Cheese with a fat percentage between 6 % and 10 % was surprisingly good and gave the best string results. The resulting threads were sufficiently coherent

### Example 5

For this experiment a cheese mass was prepared as described in Example 4, batch 1.

In order to find the optimal diameter of threads to form the final product, different nozzle heads having different hole diameter were tested.

| Batch 1 | Batch 2 | Batch 3 |
|---|---|---|
| 0.5 mm hole diameter | 1.0 mm hole diameter | 2.0 mm hole diameter |

The best result was obtained when using a 0.5 mm nozzle head. Using a nozzle head with 2.0 mm hole diameter resulted in a net having a heavy appearance and it was difficult to cool down.

### Example 6

For these experiments cheese e.g. 172.4 kg low fat cheese (unmatured) and 27.6 kg of 27% fat matured cheese was loaded into a Stephan cooker. Salt (1.5 %), water (5.3 %) and emulsifier (3,2 % Joha T Neu) were introduced into the cooker and mixed while heating to 82°C - 85°C at 750 rpm in the steam-jacketed cooker and by direct steam injection (adds 0.13 kg condense per kg product) to speed up the cooking time. The preferred pH for the product was found to be between 5.5 - 5.8. For further adjusting of pH citric acid or Joha T Neu may be added. After the product has reacted a temperature between 82°C and 85°C vacuum is drawn on the system for approx. 30 seconds. At this point, the cheese mix was ready for the shaping and cooling process.

The cheese mass was loaded into a single jacket extruder (Handtmann) where the cheese is lead through a nozzle head with 0.5 mm diameter holes (displaced from each other) to create a continuous line of threads. The pattern was formed on a moving convey belt. The cheese was subsequently packed and stored under refrigeration.

### Example 7

For this experiment a cheese mass was prepared as described in Example 1. Temperature was varied in the natural cheese product before extruding, from 55 to 58 degrees.

| Batch 1 | Batch 2 |
|---|---|
| 55 gr | 58 gr |

The resulting network, reticulate natural cheese product was characterized by methods 1-3.

Results of measurement of thickness of threads in example 7.1 and 7.2

### Results for 7.1 and 7.2 samples

| | Thickness of threads (mm) | |
|---|---|---|
| | mean, n= 18 | std |
| 7.1 | 1.00 | 0.06 |
| 7.2 | 1.09 | 0.09 |

Results of measurement of density, by method 2.

### Results for example 7.1 and 7.2 samples

| | Density of network, g/cm³ | |
|---|---|---|
| | mean, n= 9 | std |
| 7.1 | 0.35 | 0.02 |
| 7.2 | 0.53 | 0.03 |

| | | |
|---|---|---|
| Density of cheese mass before extrusion, example 7.1 is measured as 1.06 for comparison. | | |

Description of the Microstructure of the threads, which the network is built of, visualised by Confocal Laser Scanning Microscopy.

For comparison a mozzarella cheese exhibits a structure which is oriented in long pools of fat/water (black), where the stringy nature of the proteins can be seen in the green (grey) part of the pictures (Figure 2a). For the Natural Cheese Product, there is no orientation of the cheese structure, fat (black) is seen in round pools and protein (grey) is randomly distributed around the fat (Figure 2b). There is no longitudinal orientation as seen in above pictures of a typical mozzarella. These results describes the non-mozzarella structure of the reticulate natural cheese product.

### Example 8

For this experiment lemon concentrate (an acidic concentrate) was used as a first pH adjustment of the dairy-based product prior to extrusion to investigate the effect on taste and functionality.

Cheese e.g. 40 kg medium fat cheese (30+ unmatured) and 18 kg of matured cheese was loaded into a double screw direct steam injection cooker (Almac). Salt (1.3 %) was introduced into the cooker, mixed for 30 seconds at 30 rpm. Immediately after mixing, steam was directly applied to the mass by means of 2 injectors, which were positioned at both sides of the cooker. The steam, together with the mechanical effect (80 rpm) of the screws separated the cheese mass. Heating and mixing was continued until the cheese mass had a temperature of 55 °C. When the cheese mass reached the temperature of 55 °C two different lemon concentrate concentrations were tested (2580 g (batch 1) and 2000 g (batch 2), 50 Brix) was introduced into the cooker and the pH of the cheese mass was adjusted to pH 4.40 and mixed with the hot cheese for 3 minutes and 30 seconds (80 rpm). After mixing the lemon concentrate into the cheese mass, NaOH was added into the cooker adjusting the pH of the mass to pH 5.50, and mixed for 10 minutes at 80 rpm to form a homogeneous cheese mass. At this point, the cheese mix was ready for the shaping and cooling process.

The cheese mass was loaded into a single jacket extruder (Handtmann) which leads the cheese through a nozzle head with 0.5 mm diameter holes (displaced from each other) to create a continuous line of threads. An air stream was applied around the threads to cool them down so they would keep their 3-D form when falling on to a moving table that was located beneath the single jacket extruder. The cheese was subsequently packed and stored under refrigeration.

The cheese mass was analysed and the following results were found:

| | |
|---|---|
| Batch 1 | Batch 2 |
| 2580 g | 2000 g |
| pH 4.20 | pH 4.35 |

Even though the pH value obtained from the first pH adjustment for both batch 1 and batch 2 was very low, the best results were obtained with batch 2 when adjusting the pH to 4.35. Overall conclusion from the experiment was that it is possible to use an acidic concentrate, such as the lemon concentrate, for the first pH adjustment without effecting taste and functionality.

### References

Kosikowski and Mistry (1997); "Cheese and fermented milk foods"; 3. Edition.

## Claims

1. A method for producing a reticulate dairy-based product, said method comprising the steps of:
(a) subjecting a dairy-based product to an extrusion process to obtain multiple individual threads of the dairy-based product,
(b) structuring said multiple individual threads of the dairy-based product to obtain a reticulate dairy-based product comprising a coherent network of multiple entangled individual threads of the dairy-based product, wherein the multiple individual threads of the dairy-based product have a diameter below 4 mm and wherein the reticulate dairy-based product has a density below 1.0 g/cm³.

2. A method according to claim 1, wherein the reticulate dairy-based product is sheet-formed.

3. A method according to claim 1, wherein the reticulate dairy-based product is formed into a form selected from cubes, balls or cylinders.

4. A method according to any one of claims 1-3, wherein the dairy-based product is a non-mozzarella type cheese product.

5. A method according to any one of the preceding claims, wherein the dairy-based product is selected from the group consisting of a natural cheese product, a recombined cheese, a processed cheese, a mix of fresh and matured cheese products, an analogue cheese product and combination/mixes hereof.

6. A method according to any one of the preceding claims, wherein the calorie intake per cm³ of the reticulate dairy-based product is less 3.3 kcal per cm³, such as less than 3 kcal, e.g. less than 2.5, such as less than 2, e.g. less than 1.9, such as less than 1.7, e.g. less than 1.5, such as less than 1.3 kcal, e.g. less than 1.2, such as less than 1.1 kcal, e.g. less than 1, such as less than 0.9, e.g. less than 0.8, such as less than 0.7 kcal, e.g. less than 0.6, such as less than 0.5 kcal, e.g. less than 0.4, such as less than 0.3 kcal, e.g. less than 0.2 kcal.

7. A method according to any one of the preceding claims, wherein the protein fibres of the dairy-based product consists essentially of a non-oriented micro-structure.

8. A method according to any one of the preceding claims, wherein the dairy-based product has a fat content below 29% fat, such as below 28%, e.g. below 27%, such as below 26%, such as below 25%, e.g. below 24%, such as below 23%, e.g. below 22%, such as below 21%, e.g. below 20%, such as below 19%, e.g. below 18%, such as below 17%, e.g. below 16%, such as below 15%, e.g. below 14%, such as below 13%, e.g. below 12%, such as below 11%, e.g. below 10%, such as below 9%, e.g. below 8%, such as below 7%, e.g. below 6%, such as below 5%, e.g. below 4%, such as below 3%, e.g. below 2%, such as below 1%, e.g. in the range from 0.01% - 29%, such as in the range from 1% - 28%, e.g. in the range from 2% - 27%, such as in the range from 3% - 26% e.g. in the range from 4% - 25%, such as in the range from 5% - 24% e.g. in the range from 6% - 23%, such as in the range from 7% - 22% e.g. in the range from 8% - 21%, such as in the range from 9% - 20% e.g. in the range from 10% - 19%, such as in the range from 11% - 18% e.g. in the range from 12% - 17%, such as in the range from 13% - 16%, e.g. in the range from 14% - 15%, such as in the range from 6% - 10%.

9. A method according to any one of the preceding claims, wherein the multiple individual threads of the dairy-based product obtained in step (a) is subjected to a cooling, heating, coating, decorating and/or a drying step.

10. A reticulate dairy-based product obtainable by the method according to claims 1-9.

11. A reticulate dairy-based product comprising a coherent network of multiple entangled individual threads of a dairy-based product, wherein the individual threads have a diameter below 4mm.

12. A reticulate dairy-based product according to any one of claims 10-11, wherein the dairy-based product is selected from the group consisting of a natural cheese product, a recombined cheese, a processed cheese, a mix of fresh and matured cheese products, an analogue cheese product and combination/mixes hereof.

13. A reticulate dairy-based product according to claim 10-12, having a density below 1.0 g/cm³.

14. A reticulate dairy-based product according to any one of claims 10-13, having a dry matter content of at least 30 %.

15. A reticulate dairy-based product according to any one of claims 10-14, wherein the dairy-based product is a non-mozzarella type cheese product.

## Patentansprüche

1. Verfahren zur Herstellung eines netzartigen Molkereiprodukts, wobei das Verfahren folgende Schritte umfasst:
(a) Unterwerfen eines Molkereiprodukts einem Extrusionsverfahren zum Erhalten mehrerer Einzelfäden des Molkereiprodukts,
(b) Strukturieren der mehreren Einzelfäden des Molkereiprodukts zum Erhalten einer netzartigen Molkereiprodukts, umfassend ein zusammenhängendes Netzwerk aus mehreren verwickelten Einzelfäden des Molkereiprodukts, wobei die mehreren Einzelfäden des Molkereiprodukts einen Durchmesser von unter 4 mm aufweisen und wobei das netzartige Molkereiprodukt eine Dichte von unter 1,0 g/cm³ aufweist.

2. Verfahren nach Anspruch 1, wobei das netzartige Molkereiprodukt blattförmig ist.

3. Verfahren nach Anspruch 1, wobei das netzartige Molkereiprodukt zu einer Form ausgebildet wird, ausgewählt aus Würfeln, Kugeln oder Zylindern.

4. Verfahren nach einem der Ansprüche 1-3, wobei das Molkereiprodukt ein Käseprodukt nicht vom Mozzarellatyp ist.

5. Verfahren nach einem der vorhergehenden Ansprüche, wobei das Molkereiprodukt ausgewählt ist aus der Gruppe, bestehend aus einem natürlichen Käseprodukt, einem rekombinierten Käse, einem Schmelzkäse, einem Gemisch aus frischen und gereiften Käseprodukten, einem Analogkäseprodukt und Kombinationen/Mischungen davon.

6. Verfahren nach einem der vorhergehenden Ansprüche, wobei die Kalorienaufnahme pro cm³ des netzartigen Käseprodukts weniger als 3,3 kcal pro cm³, wie weniger als 3 kcal, z. B. weniger als 2,5, wie weniger als 2, z. B. weniger als 1,9, wie weniger als 1,7, z. B. weniger als 1,5, wie weniger als 1,3 kcal, z. B. weniger als 1,2, wie weniger als 1,1 kcal, z. B. weniger als 1, wie weniger als 0,9, z. B. weniger als 0,8, wie weniger als 0,7 kcal, z. B. weniger als 0,6, wie weniger als 0,5 kcal, z. B. weniger als 0,4, wie weniger als 0,3 kcal, z. B. weniger als 0,2 kcal, ist.

7. Verfahren nach einem der vorhergehenden Ansprüche, wobei die Proteinfasern des Molkereiprodukts im Wesentlichen aus einer nicht gerichteten Mikrostruktur bestehen.

8. Verfahren nach einem der vorhergehenden Ansprüche, wobei das Molkereiprodukt einen Fettgehalt von weniger als 29 % Fett, wie unter 28 %, z. B. unter 27 %, wie unter 26 %, wie unter 25 %, z. B. unter 24 %, wie unter 23 %, z. B. unter 22 %, wie unter 21 %, z. B. unter 20 %, wie unter 19 %, z. B. unter 18 %, wie unter 17 %, z. B. unter 16 %, wie unter 15 %, z. B. unter 14 %, wie unter 13 %, z. B. unter 12 %, wie unter 11 %, z. B. unter 10 %, wie unter 9 %, z. B. unter 8 %, wie unter 7 %, z. B. unter 6 %, wie unter 5 %, z. B. unter 4 %, wie unter 3 %, z. B. unter 2 %, wie unter 1 %, z. B. im Bereich von 0,01 % bis 29 %, wie im Bereich von 1 % bis 28 %, z. B. im Bereich von 2 % bis 27 %, wie im Bereich von 3 % bis 26 % z. B. im Bereich von 4 % bis 25 %, wie im Bereich von 5 % bis 24 % z. B. im Bereich von 6 % bis 23 %, wie im Bereich von 7 % bis 22 % z. B. im Bereich von 8 % bis 21 %, wie im Bereich von 9 % bis 20 % z. B. im Bereich von 10 % bis 19 %, wie im Bereich von 11 % bis 18 % z. B. im Bereich von 12 % bis 17 %, wie im Bereich von 13 % bis 16 %, z. B. im Bereich von 14 % bis 15 %, wie im Bereich von 6 % bis 10 % aufweist.

9. Verfahren nach einem der vorhergehenden Ansprüche, wobei die in Schritt (a) erhaltenen mehreren Einzelfäden des Molkereiprodukts einem Kühl-, Erwärm-, Beschichtungs-, Dekorier- und/oder Trockenschritt unterworfen werden.

10. Netzartiges Molkereiprodukt, erhaltbar durch ein Verfahren nach Ansprüchen 1-9.

11. Netzartiges Molkereiprodukt, umfassend ein zusammenhängendes Netzwerk aus mehreren verwickelten Einzelfäden eines Molkereiprodukts, wobei die Einzelfäden einen Durchmesser von unter 4 mm aufweisen.

12. Netzartiges Molkereiprodukt nach einem der Ansprüche 10-11, wobei das Molkereiprodukt ausgewählt ist aus der Gruppe, bestehend aus einem natürlichen Käseprodukt, einem rekombinierten Käse, einem Schmelzkäse, einem Gemisch aus frischen und gereiften Käseprodukten, einem Analogkäseprodukt und Kombinationen/Mischungen davon.

13. Netzartiges Molkereiprodukt nach einem der Ansprüche 10-12 mit einer Dichte von unter 1,0 g/cm3.

14. Netzartiges Molkereiprodukt nach einem der Ansprüche 10-13 mit einem Trockenmassegehalt von mindestens 30 %.

15. Netzartiges Molkereiprodukt nach einem der Ansprüche 10-14, wobei das Molkereiprodukt ein Käseprodukt nicht vom Mozzarellatyp ist.

## Revendications

1. Procédé de production d'un produit laitier réticulé, ledit procédé comprenant les étapes suivantes :
(a) application à un produit laitier d'un processus d'extrusion pour obtenir de multiples fils individuels du produit laitier,
(b) structuration desdits multiples fils individuels du produit laitier pour obtenir un produit laitier réticulé comprenant un réseau cohérent de multiples fils individuels du produit laitier enchevêtrés, dans lequel les multiples fils individuels du produit laitier possèdent un diamètre inférieur à 4 mm et dans lequel le produit laitier réticulé possède une densité inférieure à 1,0 g/cm³.

2. Procédé selon la revendication 1, dans lequel le produit laitier réticulé est en forme de feuille.

3. Procédé selon la revendication 1, dans lequel le produit laitier réticulé est mis en forme sous une forme choisie parmi des cubes, des boules ou des cylindres.

4. Procédé selon l'une quelconque des revendications 1 à 3, dans lequel le produit laitier est un produit fromager d'un type autre que la mozzarella.

5. Procédé selon l'une quelconque des revendications précédentes, dans lequel le produit laitier est choisi parmi le groupe consistant en un produit fromager naturel, un fromage reconstitué, un fromage fondu, un mélange de produits fromagers frais et affinés, un produit fromager analogue et une combinaison/des mélanges de ceux-ci.

6. Procédé selon l'une quelconque des revendications précédentes, dans lequel l'apport calorique par cm³ du produit laitier réticulé est inférieur à 3,3 kcal par cm³, tel qu'inférieur à 3 kcal, p. ex. inférieur à 2,5, tel qu'inférieur à 2, p. ex. inférieur à 1,9, tel qu'inférieur à 1,7, p. ex. inférieur à 1,5, tel qu'inférieur à 1,3 kcal, p. ex. inférieur à 1,2, tel qu'inférieur à 1,1 kcal, p. ex. inférieur à 1, tel qu'inférieur à 0,9 kcal, p. ex. inférieur à 0,8, tel qu'inférieur à 0,7 kcal, p. ex. inférieur à 0,6, tel qu'inférieur à 0,5 kcal, p. ex. inférieur à 0,4, tel qu'inférieur à 0,3 kcal, p. ex. inférieur à 0,2 kcal.

7. Procédé selon l'une quelconque des revendications précédentes, dans lequel les fibres protéiques du produit laitier consistent essentiellement en une microstructure non orientée.

8. Procédé selon l'une quelconque des revendications précédentes, dans lequel le produit laitier possède une teneur en matière grasses inférieure à 29 % de matières grasses, telle qu'inférieure à 28 %, p. ex. inférieure à 27 %, telle qu'inférieure à 26 %, telle qu'inférieure à 25 %, p. ex. inférieure à 24 %, telle qu'inférieure à 23 %, p. ex. inférieure à 22 %, telle qu'inférieure à 21 %, p. ex. inférieure à 20 %, telle qu'inférieure à 19 %, p. ex. inférieure à 18 %, telle qu'inférieure à 17 %, p. ex. inférieure à 16 %, telle qu'inférieure à 15 %, p. ex. inférieure à 14 %, telle qu'inférieure à 13 %, p. ex. inférieure à 12 %, telle qu'inférieure à 11 %, p. ex. inférieure à 10 %, telle qu'inférieure à 9 %, p. ex. inférieure à 8 %, telle qu'inférieure à 7 %, p. ex. inférieure à 6 %, telle qu'inférieure à 5 %, p. ex. inférieure à 4 %, telle qu'inférieure à 3 %, p. ex. inférieure à 2 %, telle qu'inférieure à 1 %, p. ex. dans la plage de 0,01 % à 29 %, telle que dans la plage de 1 % à 28 %, p. ex. dans la plage de 2 % à 27 %, telle que dans la plage de 3 % à 26 %, p. ex. dans la plage de 4 % à 25 %, telle que dans la plage de 5 % à 24 %, p. ex. dans la plage de 6 % à 23 %, telle que dans la plage de 7 % à 22 %, p. ex. dans la plage de 8 % à 21 %, telle que dans la plage de 9 % à 20 %, p. ex. dans la plage de 10 % à 19 %, telle que dans la plage de 11 % à 18 %, p. ex. dans la plage de 12 % à 17 %, telle que dans la plage de 13 % à 16 %, p. ex. dans la plage de 14 % à 15 %, telle que dans la plage de 6 % à 10 %.

9. Procédé selon l'une quelconque des revendications précédentes, dans lequel les multiples fils individuels du produit laitier obtenus lors de l'étape (a) sont soumis à une étape de refroidissement, de chauffage, d'enrobage, de décoration et/ou de séchage.

10. Produit laitier réticulé pouvant être obtenu par le procédé selon les revendications 1 à 9.

11. Produit laitier réticulé comprenant un réseau cohérent de multiples fils individuels d'un produit laitier enchevêtrés, dans lequel les fils individuels possèdent un diamètre inférieur à 4 mm.

12. Produit laitier réticulé selon l'une quelconque des revendications 10 à 11, dans lequel le produit laitier est choisi parmi le groupe consistant en un produit fromager naturel, un fromage reconstitué, un fromage fondu, un mélange de produits fromagers frais et affinés, un produit fromager analogue et une combinaison/des mélanges de ceux-ci.

13. Produit laitier réticulé selon les revendications 10 à 12, possédant une densité inférieure à 1,0 g/cm³.

14. Produit laitier réticulé selon l'une quelconque des revendications 10 à 13, possédant une teneur en matière sèche d'au moins 30 %.

15. Produit laitier réticulé selon l'une quelconque des revendications 10 à 14, dans lequel le produit laitier est un produit fromager d'un type autre que la mozzarella.
